# EUROPEAN PATENT SPECIFICATION

(11) **EP 0 633 287 B1**
(45) Date of publication and mention of the grant of the patent: **10.09.1997**
(21) Application number: 93810476.7
(22) Date of filing: 06.07.1993
(51) Int. Cl.: C08K 5/5393

(54) **Clarifying nucleating and/or large-improving compositions**
Klarheit, Nukleierung und/oder Trübung verbessernde Zusammensetzungen
Compositions améliorant, la nucléation la clarté et/ou l'opacité

(43) Date of publication of application: 11.01.1995
(73) Proprietor: Clariant Finance (BVI) Limited, Road Town, Tortola (VG)
(72) Inventor: Staniek, Peter, D-79400 Kandern (DE); Stoll, Klaus, D-7856 Rümmingen (DE)
(74) Representative: D'haemer, Jan Constant

(56) References cited:
- EP-A- 0 407 926

## Description

This invention relates to the use of a monophosphonite and/or diphosphonite in polyolefin compositions for enhancing the optical properties of these polyolefin compositions.

Transparency in polymers is often a highly desirable property, for example in films. It is naturally desirable to use relatively cheap polymers for films and the like, but many of these cheaper polymers, as produced by known methods are not sufficiently transparent. As a result, when transparency is desired, relatively expensive polymers such as polyesters are used.

Furthermore, it has been possible to clarify some inherently hazy polymers and therefore obtain good transparency by adding clarifiers prior to processing. Examples of such clarifiers are dibenzylidene sorbitol compounds, organic phosphates and salts of carboxylic acids. However, such clarifiers can result in undesired discoloration and evolution of unpleasant smell during processing.

Surprisingly it has been found that using phosphonites (optionally with phosphites) can markedly enhance the transparency of polyolefins such as polypropylene.

According to the invention, there is provided a composition for improving optical properties, especially for alleviating (i.e. improving) the haze of a polyolefin composition, the said haze improving composition (hereinafter referred to as the haze improving composition) comprising
a) a monophosphonite and/or diphosphonite (hereinafter defined as component a) and optionally
b) a phosphite (hereinafter defined as component b).

Further according to the invention there is provided a method for improving the optical properties, especially for alleviating (i.e. improving) the haze of a polyolefin composition comprising applying an effective amount of a haze-improving composition (hereinafter defined as the haze improving composition) comprising
a) a monophosphonite and/or diphosphonite (hereinafter defined as component a) and optionally
b) a phosphite (hereinafter defined as component b).

Still further according to the invention there is provided the use of a monophosphonite and/or diphosphonite (hereinafter defined as component a) and optionally phosphite (hereinafter defined as component b) for alleviating haze in polyolefin compositions such as polypropylene or polyethylene. This also preferably improves the clarity of the polymer.

Preferably in a haze-improving composition both phosphonite and phosphite are present.

Preferably the amount of haze improving composition applied is from 0.01 to 5%, more preferably 0.05 to 2% based on the weight of polymeric material to be haze improved.

Preferably when both a monophosphonite and/or diphosphonite and phosphite are present in a composition according to the invention they are present in an amount of 30-70% of monophosphonite and/or diphosphonite and 70-30% of phosphite (all percentages being by weight).

We have therefore found that the phosphonites act as nucleating agents or clarifiers to improve the optical properties, especially to improve haze.

Preferred mono- and/or diphosphonites are selected from compounds of formula I 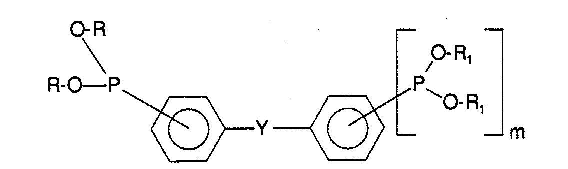 in which
m is 0 or 1;
each R, independently, is a group derived from an aliphatic,araliphatic, alicyclic or aromatic alcohol containing one or two OH groups; whereby the two -OH groups are not positioned to be able to form a P-containing ring; (hereinafter defined as the monovalent significances of R);
or both groups R form a group derived from an aliphatic, araliphatic, alicyclic or aromatic alcohol containing two OH groups in such a position that they can form a cyclic group with a single phosphorus atom (hereinafter defined as the divalent significances of R);
R₁ is a monovalent or divalent significance of R;
Y is a direct bond -O-, -S-, -CH(R₅)- or C₆H₄- (preferably meta or para C₆H₄);
where R₅ is hydrogen or C₁₋₈alkyl or COOR₆ and R₆ is C₁₋₈ alkyl.

Preferably R and R₁ of component a) are selected from
2-t-butyl-phenyl, 2-phenyl-phenyl,2-(1,1-di-methyl-prop-1-yl)- phenyl, 2-cyclohexylphenyl, 2-t-butyl-4-methylphenyl, 2,4-di-t-butyl-phenyl, 2,4-di-phenyl-phenyl, 2,4-di-t-octyl-phenyl, 2-t-butyl-4-phenyl-phenyl,2,4-bis(1,1-di-methyl-prop-1-yl)phenyl,2-(2-phenyl-prop-2-yl)-phenyl, 2-t-butyl-4-(2-phenyl-prop-2-yl)phenyl, 2-(2-phenyl-prop-2-yl)-4-t-butyl-phenyl, 2,4-bis(2-phenyl- prop-2-yl)-phenyl, 2,4-di-t-butyl-6-methyl-phenyl or 2,4,6-tri-t-butyl-phenyl.

Preferably component a) comprises
1) a diphosphonite of formula I defined above (m=1)
2) a monophosphonite of formula I defined above (m=0);
preferably in a ratio of 4:1 to 2:1.

Preferably R is R' where R' is a linear or branched C₁₋₂₂alkyl or phenyl, unsubstituted or substituted by 1 to 3 linear or branched C₁₋₁₂alkyl groups or C₁₋₁₂ alkyl monosubstituted by unsubstituted phenyl. Preferably any such phenyl substitution when present, is C₁₋₄alkyl. Most preferably R is R'' where R'' is 2,4-ditertiary butyl phenyl.

Preferably R₁ is R₁' where R₁' is a significance of R' independently of R'. Most preferably R₁ is R₁'' when R₁'' is a significance of R''.

Preferably Y is a direct bond
Most preferably R and R₁ are the same.

More preferably in component a) the monophosphonite present is bis (2,4-tert.butyl phenyl) biphenylene phosphonite and the diphosphonite present is tetrakis (2,4-tert.butyl phenyl) biphenylene diphosphonite.

Preferred phosphites for use in a haze improving composition according to the invention are those of formula II 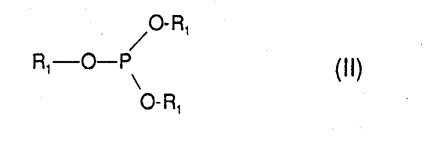 where R₁ is as defined above.

More preferred phosphites of component b) are selected from tris(2,4-di-t.butylphenyl)phosphite, tris(nonylphenyl)phosphite, di-isodecylphenyl phenylphosphite,. and trilaurylphosphite.

The most preferred phosphite is tris(2,4-di-t-butyl-phenyl)phosphite.

Most preferably the haze-improving composition comprises:
a1) 50-80% of a diphosphonite of the formula V 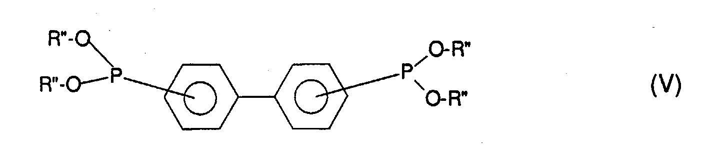
a2) 5-25% of a monophosphonite of formula VI 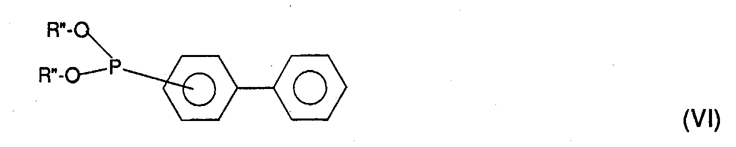
b) 5-25% of a phosphite of formula VII 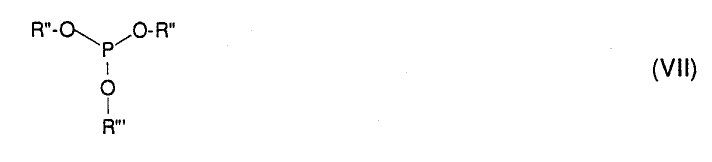 in which each R'' is 2,4-di-tertiary butyl phenyl; and where the percentages are weight percentages (based on the sum of the compounds of formulae V, VI, and VII present in the haze-improving composition being 100%).

The most preferred haze-improving composition (containing compounds of formulae V, VI and VII) is that prepared by the Friedel-Crafts reaction
e.g. the reaction of 1 mol of a compound of the formula 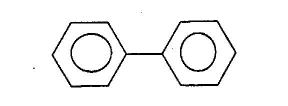 with 2 mols of PCl₃ and 4 mols of a compound of the formula

R''-OH

where R'' is 2,4-ditertiary butylphenyl

Such a Friedel-Crafts reaction is described in the article by G.M. Kosolapoff in G.A. Olah "Friedel-Crafts and Related Reactions" (Interscience Publishers, New York, 1965).

It is surprising that phosphonites have been found to clarify polyolefins such as polypropylene.

Further, haze improving compositions according to the invention may additionally include a compound of formula VIII or IX (hereinafter defined as component c)

R₇(OH) (VIII)

R₈(OH)₂ (IX)

in which R₇ has a monovalent significance of R and R₈ has a divalent significance of R. More preferably the haze improving composition comprises a compound of formula VIII where R₇ is R" as defined above.

Preferably, when present the amount of compound of formula VIII and IX is 1-3% based on the weight of components a) and b)

The polymeric material, the haze of which is improved according to the invention is a polyolefin, especially polyethylene and more especially polypropylene.

Preferably in a composition or method according to the invention, no further clarifying agents, such as dibenzylidene sorbitols, organic phosphates and salts of carboxylic acids are present.

Further additives that can be added to a polyolefin composition according to the invention include antioxidants, such as sterically hindered phenols, secondary aromatic amines orthioethers, such as described in "Kunststoff-Additive"- Gächter/Müller, 3rd Ed., 1990, pp 42-50, the contents of which is incorporated herein by reference; acid scavengers such as sodium-, magnesium- or calciumstearates or -lactates, hydrotalcite, alkoxylated or hydroxylated amines; U.V. stabilizers such as sterically hindered amine (e.g. N-unsubstituted, N-acyl-substituted or N-alkylated 2,2,6,6-tetra-methyl-piperidine compounds, also known as hindered amine light stabilizers HALS); U.V. absorbers (e.g. 2-(2'-hydroxy-phenyl)benztriazoles, 2-hydroxybenzophenones, 1,3-bis-(2'hydroxy-benzoyl)benzene-salicylates, cinnamates or oxalic acid diamides); U.V. quenchers (e.g. benzoates or substituted benzoates), antistatic agents, flameproofing agents, softeners, plasticizers, lubricants, guard agents, metal desactivators, complexants, biocides, fungicides, nucleating agents, fillers, pigments and other impact modifiers.

Especially preferred polyolefin materials whose haze can be improved by the composition according to the invention are polyethylene (e.g. high density polyethylene, low density polyethylene, linear low density polyethylene, or medium density polyethylene), polypropylene, polybutylene, poly-4-methylpentene and copolymers thereof.

The haze improving compositions are especially suitable for the use in polyolefins and their copolymers prepared by using processing catalysts know as Generation II to Generation V catalysts and which may or may have not (preferably have not) been subjected to a catalyst removal step.

By the term "catalyst removal step" used herein is meant a step which comprises, for the purpose of positively removing the catalyst residue contained in the polymerized polyolefins, treating the polyolefins with the compounds which can react with the catalyst residue and inactivate or solubilize the residue, such as e.g. alcohols or water and then removing the inactivated or solubilized catalyst residue by physical means such as filtration, washing, and centrifuging.

Thus in the case of suspension polymerization the step of separating the resulting polymer from a dispersion medium such as a solvent or a liquified monomer does not fall under the above-mentioned definition of the catalyst residue-removal step, although the catalyst dissolved in the dispersion medium may be removed at the separation step. The step of adding a small amount of catalyst poisons such as ethers, alcohols, ketones, esters and water to the resulting polymer suspension with a gas such as steam or nitrogen to remove the dispersion medium also does not fall under the above-mentioned definition of the catalyst residue-removal step.

What is meant by Generation I catalysts are titanium halide catalysts and an organo aluminium compound or an organo aluminium halide.

What is meant by Generation II catalysts are Generation I catalysts supported on an organo magnesium compound or based on an organo chromium compound supported on SiO₂.

What is meant by a Generation III catalyst is a Ziegler type complex catalyst supported on a halogen containing magnesium compound.

What is meant by a Generation IV catalyst is a Generation III catalyst with a silane donor.

What is meant by a Generation V catalyst is a bis-indenyl organo titanium compound supported on alumoxane or are bis-cyclopentadienyl-titanium halides activated by aluminium alkyl compounds.

Further generations of highly specific catalysts, especially useful for manufacturing highly stereoregular poly-a-olefins, which are presently under development, belong in the sense of the present invention also to the aforementioned generations of supported catalyst systems. Examples for the microstructure of such highly stereoregular polyolefins are given by syndiotactic polypropylene, isotactic stereoblock polymers, isotactic polypropylene containing steric defects distributed along the polymer chain (so called anisotactic polypropylene) or stereoirregular stereoblock polymers.

Due to the rapid progress in the development of supported newer generation catalyst systems (eg the metallocene catalysts) the commercial significance of these polymers with novel, highly interesting properties increases more and more. However, residues of such further catalyst generations, as long as they contain metals of the 3d, 4d and 5d series of the periodic system supported analogously to the earlier catalyst generations, can also cause disadvantageous properties in the polymer, as long as such residues are not removed physically and are still present in the polymer even in a disactivated form.

These Generations of Catalysts are described in the Twelfth Annual International Conference on Advances in the stabilization and Controlled Degradation of Polymers held in Luzern, Switzerland, 21-23 May 1990 in an article on pages 181 to 196 inclusive by Rolf Mülhaupt entitled "New Trends in Polyolefin Catalysts and Influence on Polymer Stability". The contents of this article is incorporated herein by reference and especially Table 1 on page 184 describing the Generation of Catalysts:

**TABLE I**

| Polyolefin Catalyst Evolution | | | | | |
|---|---|---|---|---|---|
| Generation | Example | Cat.Act. % Act.Ti (gPP/gTi atm) | | Stereoreg. (%hept.ins.) | Process Technology |
| I. | TiCl₄/AlR₃ | 40 | 0.01 | 45% | removal of cat.residues and atactic PP |
| | | | | | |
| | TiCl₃/AlEt₂Cl | 30 | 0.1 | 92% | removal of catalyst residues |
| | | | | | |
| II | Mg(OEt₂)/TiCl₄/AIR₃ | 40000 | | 50% | no removal of cat.residues |
| | SiO₂/Cp₂Cr | 40000 | HDPE | | (mainly HDPE/LLDPE) |
| | | | | | |
| III | Mod.TiCl₃cat. | 5000 | 1 | 95% | no purification |
| | MgCl₂/TiCl₄/AIR₃ -ester donor | 20000 | 10 | 92% | |
| | | | | | |
| IV | MgCl₂/TiCl₄/AIR₃ | 40000 | 18 | 99% | no purification |
| | -silane donor | | | | no extrusion |
| | | | | | |
| V | Bis-indenyl-TiR₂ on | 40000 | 100 | 99% | novel PPs, narrow MWD |
| | (AICH₃O)₂ | | | | |

in which R is an organo group; HDPE is high density polyethylene, LLDPE is linear low density polyethyene, Cp is cyclopentadienyl, Et is ethyl, PP is polypropylene and MWD is molecular weight distribution.

Compositions used according to the invention may be added to the polymeric material before, during or after the polymerization step and may be added in solid or molten form, in solution preferably as a liquid concentrate (e.g. using heptane, octane, toluene, etc. as solvent) containing from 10 to 80% by weight of the composition and 90 to 20% by weight of a solvent, or as a solid masterbatch composition containing 10 to 80% (more preferably 40 to 70%) by weight of the composition and 90 to 20% (more preferably 60 to 30%) by weight of a solid polymeric material which is identical or compatible with the material to be stabilized.

Compositions used according to the invention may be incorporated by known methods into the polyolefin material to be stabilized. Of importance is dry-blending of the compositions used according to the invention with the polymer fluff or coating shaped polyolefin particles, e.g. polymers spheres, with the present compositions in the form of a molten liquid, a solution or suspension/dispersion. Of particular importance is blending of the compounds with thermoplastic polyolefins in the melt, for example in a melt blender or during the formation of shaped articles, including films, tubes, fibres and foams by extrusion, injection moulding, blow moulding, roto-moulding, spinning or wire coating. The compositions according to the invention are particularly useful for polypropylene and polyethylene articles of every type.

For avoidance of doubt, where a symbol appears more than once in a formula or once in two different formulae, its significances are independent unless indicated to the contrary. However, where in a stabilizing composition, a symbol appears in a formula, the significances of the symbol are preferably the same. Any group capable of being linear or branched is linear or branched unless indicated to the contrary. Further, where a range is given, the figures defining the range are included therein. The abbreviation t-butyl means tertiary butyl, -C(CH₃)₃.

All percentages are by weight unless otherwise indicated.

The invention will now be illustrated by the following Examples in which all parts and percentages are by weight unless indicated to the contrary.

### Example 1

A polymeric mixture is prepared containing
a) 100 parts of a Himont 3rd generation polypropylene homopolymer
b) 0.1 parts of a clarifying composition comprising
   i) 65 parts of the diphosphonite of formula 1a 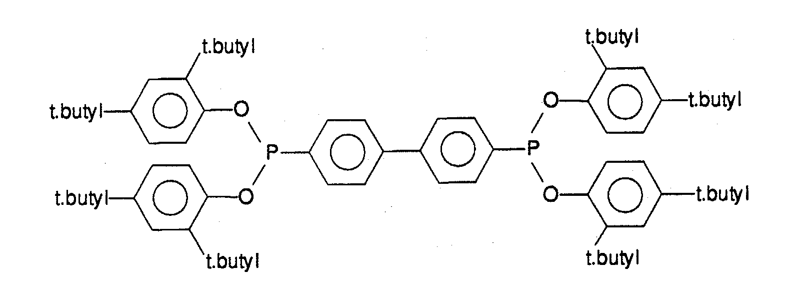 (tetrakis (2,4-di tert. butylphenyl)biphenylene diphosphonite)
   ii) 15 parts of the monophosphonite of formula 1b 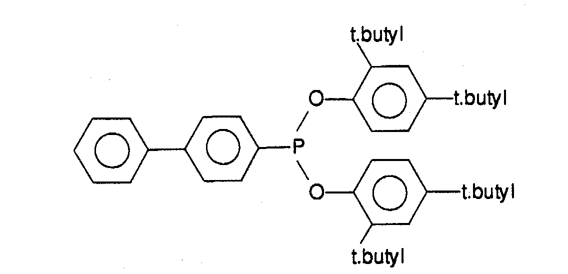 (bis (2,4-di-tert. butylphenyl) biphenylene monophosphonite)
   iii) 13 parts of the phosphite of formula 1c 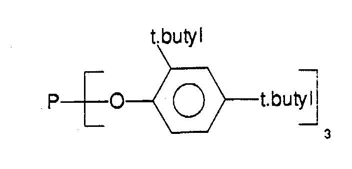 (tris (2,4 di tert. butylphenyl) phosphite)
   iv) 1.5 parts of 2,4 di tert. butyl phenol;
   v) up to 1% of chloride;
   vi) up to 0.5% of volatiles;
   vii) 4-5% of a compound of the formula 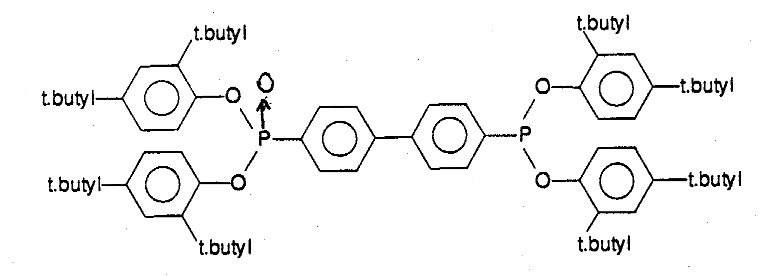
   This mixture of components i-vii is commercially available as Sandostab P-EPQ from Sandoz Ltd. Switzerland.
c) 0.1 parts of calcium stearate and
d) 0.1 parts of a commercially available antioxidant (Irganox 1010)

After dry blending, the mixture is homogenized by extrusion under mild conditions (Handle single screw extruder compression 1:3, 50 min⁻¹, 210°C), chilled in a water bath and pelletized.

The resulting pellets are injection moulded into plaques of 100 X 100 X 1 mm³ at 245°C on an Arburg injection moulding machine.

The following test methods are applied to investigate the properties of the polymer:
- Melt flow index (MFI): ASTM D-1238-70 (210°C, 2.16kg, on pellets)
- Yellowness Index (YI): ASTM D-1925-70 (on pellets or plaques)
- Haze: ASTM D-1003-61 (on plaque)

### Example 2

Example 1 is repeated using 100 parts of a Himont 3rd generation polypropylene copolymer instead of a homopolymer.

### Comparative Example A

Example 1 is repeated without the clarifying composition.

### Comparative Example B

Example 2 is repeated without the clarifying composition

| Example No. | MFI (g/10 min) | YI | Haze (%) |
|---|---|---|---|
| 1 | 3.9 | 1.7 | 32.2 |
| A | 6.6 | 2.1 | 46.0 |
| 2 | 11.1 | 1.6 | 35.6 |
| B | 17.5 | 1.7 | 44.6 |

It can be seen that Examples 1 and 2 are significantly more effective in alleviating haze than comparative Examples A and B.

### Example 3

Example 1 is repeated using

| | |
|---|---|
| 100.0 | parts of a Himont polypropylene copolymer |
| 0.1 | parts of Sandostab P-EPQ |
| 0.05 | parts of a commerically available antioxidant (Irganox 1010) |
| 0.1 | parts of calcium stearate |

100.0 parts of a Himont polypropylene copolymer 0.1 parts of Sandostab P-EPQ 0.05 parts of a commerically available antioxidant (Irganox 1010) 0.1 parts of calcium stearate After dry blending, the mixture is homogenized by an extrusion under mild conditions (Handle single screw extruder compression 1:3,50 min⁻¹, 210°C), chilled in a water bath and pelletized. These pellets are multiply extruded at 270°C (other conditions as above) and after the 1st, 3rd and 5th passage the properties of the polymer are tested as described above. For the haze and yellowness index measurements, a part of the pellets of the mentioned extrusion passes are injection moulded into plaques of 100 x 100 x1 mm³ at 245°C on an Arburg injection moulding machine.

### Comparative Example C

Example 3 is repeated using 0.1 parts of tris(2,4-di-tert-butylphenyl)phosphite (commercially available as Irgafos 168) instead of 0.1 parts Sandostab P-EPQ.

### Comparative Example D

Example 3 is repeated using 0.1 parts of 2,4-di-tert-butylphenyl)pentaerythritoldiphosphite (commercially available as Ultranox 626 )instead of 0.1 parts of Sandostab P-EPQ.

The results can be seen in the Table below.

### Comparative Example E

Example 3 is repeated using 0.1 parts of tris(nonylphenyl)phosphite (commercially available as Weston 399) instead of 0.1 parts of Sandostab P-EPQ.

The results can be seen in the Table below

| Example No. | Passages | MFI (g/10 min) | YI | Haze (%) |
|---|---|---|---|---|
| 3 | 1 | 8.2 | 7.3 | 27.2 |
| | 2 | 8.2 | 7.3 | 27.5 |
| | 3 | 10.0 | 7.2 | 25.5 |
| C | 1 | 10.7 | 7.2 | 31.9 |
| | 2 | 14.7 | 7.0 | 30.0 |
| | 3 | 19.3 | 7.1 | 33.4 |
| D | 1 | 8.6 | 7.6 | 31.0 |
| | 2 | 10.2 | 7.6 | 39.9 |
| | 3 | 11.9 | 7.6 | 38.0 |
| E | 1 | 11.0 | 6.8 | 43.1 |
| | 2 | 13.4 | 7.1 | 34.9 |
| | 3 | 13.7 | 7.0 | 32.0 |

In the balance of properties MFI, YI and Haze, Example 3 is surprisingly and significantly more effective than Comparative Examples C-E.

The Himont copolymer of polyproprylene used in Examples 2 and 3 is a Himont 3rd generation polypropylene copolymer available as Profax SA 849 and Moplen respectively.

## Claims

1. The use of a monophosphonite and/or diphosphonite for alleviating the haze of polyolefins and mixtures or blends thereof.

2. The use of a composition comprising
a) a monophosphonite and/or diphosphonite and
b) a phosphite for alleviating the haze of polyolefins and mixtures or blends thereof.

3. The use according to claim 1 or claim 2 in which the mono- or diphosphonite is selected from a compound of formula I 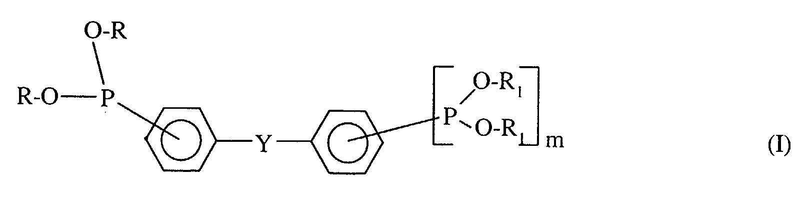 in which
m is 0 or 1;
each R, independently, is a group derived from an aliphatic, araliphatic, alicyclic or aromatic alcohol containing one or two OH groups; whereby the two -OH groups are not positioned to be able to form a P-containing ring; (hereinafter defined as the monovalent significances of R);
or both groups R form a group derived from an aliphatic, araliphatic, alicyclic or aromatic alcohol containing two OH groups in such a position that they can form a cyclic group with a single phosphorus atom (hereinafter defined as the divalent significances of R);
R₁ is a monovalent or divalent significance of R;
Y is a direct bond, -O-, -S-, -CH(R₅)- or C₆H₄-;
where R₅ is hydrogen or C₁₋₈alkyl or COOR₆ and R₆ is C₁₋₈ alkyl.

4. The use according to claim 3 in which component a) comprises
1) ) a diphosphonite of formula I defined above where m is 1 and
2) a monophosphonite of formula I defined above where m is 0.

5. The use according to claim 3 or 4 in which the composition comprises:
a1) 50 - 80 % by weight of a diphosphonite of the formula V 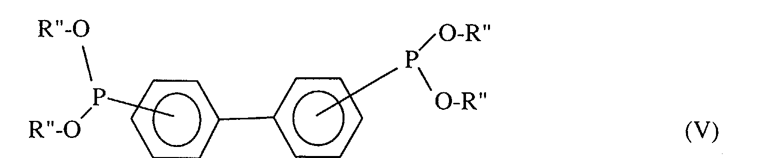
a2) 5-25% by weight of a monophosphonite of formula VI 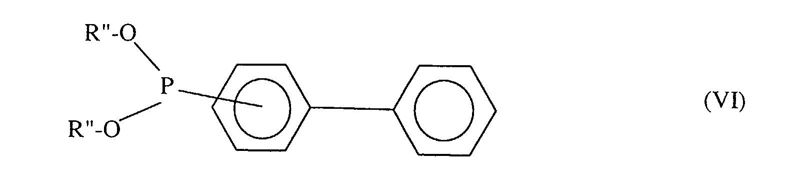
b) 5 - 25 % by weight of a phosphite of formula VII 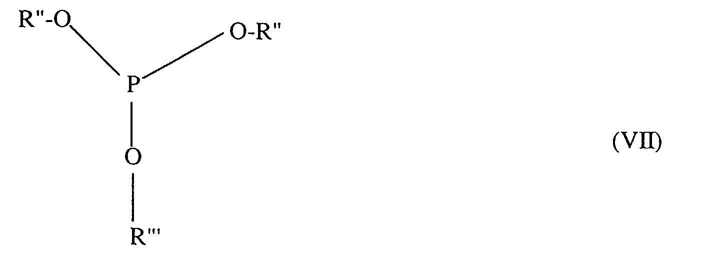 in which each R" is 2,4-di-tertiary butyl phenyl; and where the percentages are weight percentages (based on the sum of the compound of formulae V, VI, and VII being 100 % by weight).

6. The use according to claim 3 or 4 in which the composition is prepared by reacting one mol of a compound of the formula 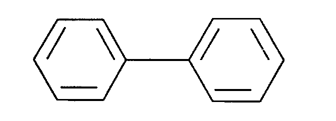 with 2 mols of PCl₃ and 4 mols of
R"-OH
where R" is 2,4-di-tertiary-butyl-phenyl, according to a Friedel Crafts reaction.

7. A method for alleviating the haze of polyolefins and mixtures or blends thereof comprising applying an amount of a compound or composition as defined in any one of claims 1 to 6.

8. A method according to claim 7 in which the amount is from 0,01 to 5 % by weight, preferable 0,05 to 2 %, based on the weight of the polyolefins.

## Patentansprüche

1. Verwendung eines Monophosphonits und/oder Diphosphonits zur Verbesserung der Trübung von Polyolefinen und Gemischen oder Mischungen davon.

2. Verwendung einer Zusammensetzung, welche umfaßt:
a) ein Monophosphonit und/oder Diphosphonit, und
b) ein Phosphit,
zur Verbesserung der Trübung von Polyolefinen und Gemischen oder Mischungen davon.

3. Verwendung nach Anspruch 1 oder Anspruch 2, wobei das Mono- oder Diphosphonit ausgewählt ist aus einer Verbindung der Formel I 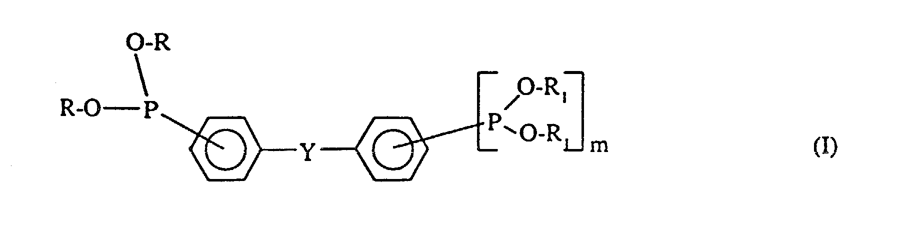 wobei
m 0 oder 1 ist,
wobei jedes R unabhängig eine von einem aliphatischen, araliphatischen, alicyclischen oder aromatischen Alkohol abgeleitete Gruppe mit ein oder zwei OH-Gruppen ist, wobei die zwei -OH-Gruppen nicht derart angeordnet sind, daß sie einen P-enthaltenden Ring bilden können (nachstehend als die Einwertigkeit von R bezeichnet), oder wobei beide R-Gruppen eine von einem aliphatischen, araliphatischen, alicyclischen oder aromatischen Alkohol abgeleitete Gruppe mit zwei OH-Gruppen bilden, die derart angeordnet sind, daß sie mit einem einzelnen Phosphoratom eine cyclische Gruppe bilden können (nachstehend als die Zweiwertigkeit von R bezeichnet), wobei R₁ eine Einwertigkeit oder Zweiwertigkeit von R bedeutet,
wobei Y eine direkte Bindung -O-, -S-, -CH(R₅)- oder C₆H₄- ist,
wobei R₅ Wasserstoff oder C₁₋₈-Alkyl oder COOR₆ ist und R₆ C₁₋₈-Alkyl ist.

4. Verwendung nach Anspruch 3, bei der die Komponente a) umfaßt
1) ein Diphosphonit der vorstehend definierten Formel I, bei der m 1 ist, und
2) ein Monophosphonit der vorstehend definierten Formel I, bei der m 0 ist.

5. Verwendung nach Anspruch 3 oder 4, bei der die Zusammensetzung enthält:
a1) 50 bis 80 Gew.-% eines Diphosphonits der Formel V 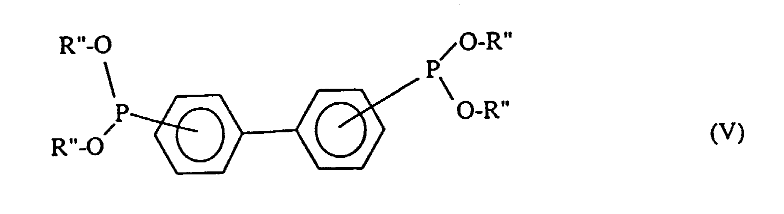
a2) 5 bis 25 Gew.-% eines Monophosphonits der Formel VI 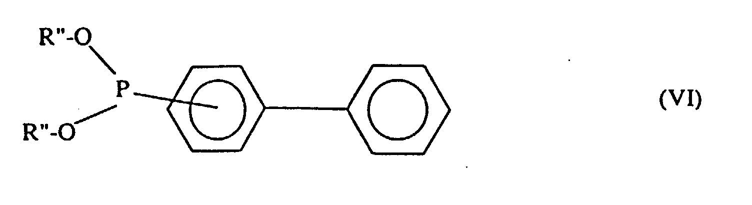
b) 5 bis 25 Gew.-% eines Phosphits der Formel VII 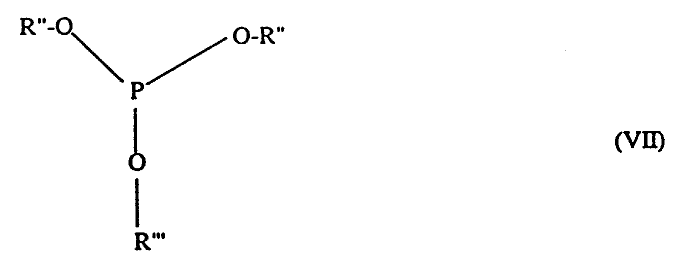
wobei jedes R" 2,4-di-tert.-Butylphenyl ist und wobei die Prozentangaben Gewichtsprozente sind (bezogen auf die Summe der Verbindungen der Formeln V, VI und VII als 100 Gew.-%).

6. Verwendung nach Anspruch 3 oder 4, bei der die Zusammensetzung durch Umsetzen eines Mols einer Verbindung der Formel 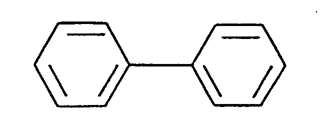 mit 2 Molen PCl₃ und 4 Molen R''-OH gemäß einer Friedel-Craft-Reaktion hergestellt wird, wobei R'' 2,4,-di-tert.-Butylphenyl ist.

7. Verfahren zur Verbesserung der Trübung von Polyolefinen und Gemischen oder Mischungen davon, welches Einsetzen einer Menge einer Verbindung oder Zusammensetzung nach einem der Ansprüche 1 bis 6 umfaßt.

8. Verfahren nach Anspruch 7, bei dem die Menge von 0,01 bis 5 Gew.-%, vorzugsweise 0,05 bis 2%, bezogen auf das Gewicht der Polyolefine beträgt.

## Revendications

1. L'utilisation d'un monophosphonite et/ou d'un diphosphonite pour réduire la turbidité des polyoléfines et de leurs mélanges de toutes sortes.

2. L'utilisation d'une composition comprenant
a) un monophosphonite et /ou un diphosphonite et
b) un phosphite
pour réduire la turbidité des polyoléfines et de leurs mélanges de toutes sortes.

3. L'utilisation selon la revendication 1 ou 2, dans laquelle le mono- ou diphosphonite est choisi parmi les composés de formule I 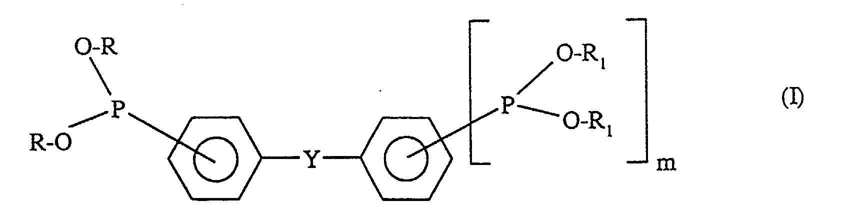 dans laquelle
m signifie 0 ou 1;
chaque R, indépendamment, signifie un groupe dérivé d'un alcool aliphatique, araliphatique, alicyclique ou aromatique contenant un ou deux groupes OH, les deux groupes OH n'étant pas situés sur des positions telles qu'ils puissent former un cycle contenant P ( défini ci-après comme la signification monovalente de R );
ou bien les deux groupes R forment un groupe dérivé d'un alcool aliphatique, araliphatique, alicyclique ou aromatique contenant deux groupes OH situés sur des positions telles qu'ils puissent former un groupe cyclique avec un seul atome de phosphore ( défini ci-après comme la signification divalente de R );
R₁ possède une signification monovalente ou divalente de R;
Y signifie une liaison directe, -O-, -S-, -CH(R₅)- ou C₆H₄ -;
où R₅ signifie l'hydrogène ou groupe alkyle en C₁₋₈ ou COOR₆ et R₆ signifie un groupe alkyle en C₁₋₈.

4. L'utilisation selon la revendication 3, dans laquelle le composant a) comprend
1) un diphosphonite de formule I définie plus haut où m signifie 1 et
2) un monophosphonite de formule I définie plus haut où m signifie 0.

5. L'utilisation selon la revendication 3 ou 4, dans laquelle la composition comprend:
a1) 50-80% en poids d'un diphosphonite de formule V 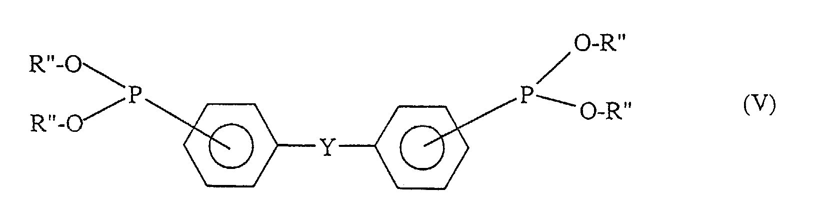
a2) 5-25% en poids d'un monophosphonite de formule VI 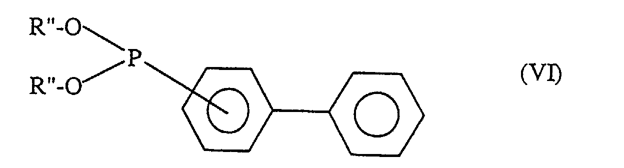
b) 5-25% en poids d'un phosphite de formule VII 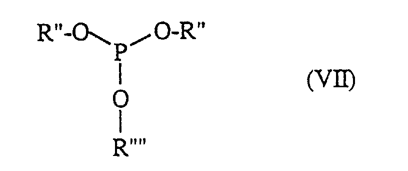 formules dans lesquelles chaque R" signifie le groupe 2,4-di-tertiobutyl-phényle et où les pourcentages sont des pourcentages en poids ( basés sur la somme des composés de formule V, VI et VII étant 100% en poids ).

6. L'utilisation selon la revendication 3 ou 4, dans laquelle la composition est préparée par réaction de une mole d'un composé de formule 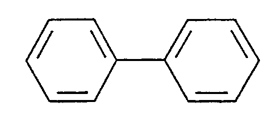 avec 2 moles de PCl₃ et 4 moles de
R"-OH
où R" signifie le groupe 2,4-di-tertiobutyl-phényle, selon une réaction de Friedel Crafts.

7. Un procédé pour réduire la turbidité des polyoléfines et de leurs mélanges de toutes sortes, comprenant l'application d'une quantité d'un composé ou d'une composition tels que définis à l'une quelconque des revendications 1 à 6.

8. Un procédé selon la revendication 7, dans lequel la quantité est de 0,01 à 5% en poids, de préférence de 0,05 à 2%, basée sur le poids des polyoléfines.
